# EUROPEAN PATENT SPECIFICATION

(11) **EP 3 336 002 B1**
(45) Date of publication and mention of the grant of the patent: **03.04.2019**
(21) Application number: 16203573.7
(22) Date of filing: 13.12.2016
(51) Int. Cl.: B65D 27/16, B65D 27/38, B65D 33/20, B65D 27/06

(54) **REUSABLE SEALING DEVICE FOR PLASTIC COURIER BAG**
WIEDERVERWENDBARE VERSIEGELUNGSVORRICHTUNG FÜR KUNSTSTOFFKURIERTASCHE
DISPOSITIF D'ÉTANCHÉITÉ RÉUTILISABLE POUR SAC MESSAGER EN PLASTIQUE

(43) Date of publication of application: 20.06.2018
(73) Proprietor: Lin, Shih-Fong, New Taipei City (TW)
(72) Inventor: Lin, Shih-Fong, New Taipei City (TW)
(74) Representative: Horak, Michael

(56) References cited:
- EP-A2- 1 361 162
- CN-A- 105 923 269

## Description

### BACKGROUND OF THE INVENTION

### (a) Technical Field of the Invention

The present invention is generally related to the sealing of envelope or bag, and more particular to a reusable and convenient sealing device for a plastic courier bag.

### (b) Description of the Prior Art

For on-line store owners and electronic commerce operators, they usually package magazines, books, and similar paper products in a plastic courier bag before handing them to the couriers. The plastic courier bag has a bag member with an opening along a side and a sealing flap extended from the opening. An inner side of the sealing flap facing the opening is coated with adhesive. The to-be-delivered product is placed in the bag member, the sealing flat is flipped to cover the opening and adhered to the bag member. Postal and express delivery operators also follow similar practices.

When a customer receives such a bag, he/she usually has to cut or tear open the bag member along the sealing flap. Either way, the bag member is damaged, cannot be reused, and therefore has to be trashed. This is not only wasteful but also not environmentally friendly as the plastic bag is not self-decomposable.

Prior art patent document in this field is known, such as CN 105 923 269 A, which disclosers a sealing device attached to one side of a flap of a container, but this document does not each a reinforcing member attached to an opposite side of the flap for reinforcing the flap and easing an operation of tearing the sealing device to open the container.

### SUMMARY OF THE INVENTION

The objective of the present invention is to provide a plastic courier bag having a sealing device so that the bag may be conveniently sealed, opened, and, most importantly, such that the bag may be reused multiple times.

The present invention provides a plastic courier bag having a sealing device that is attached an inner side of a sealing flap of the plastic courier bag and involves an elongated release base member having a separation line along the release base member's length. A double-sided adhesive layer is attached to a side of the release base member so that the release base member may adhere to an inner side of the plastic courier bag's sealing flap and seal the plastic courier bag. Multiple sealing devices of the present invention may be applied to the inner side of a plastic courier bag and multiple reinforcing tapes may be applied to the outer side. In this way, the plastic courier bag may be reused many times.

The sealing device includes a release base member of an elongate shape having a separation line along a length of the release base member separating the release base member into a base piece and a pull strip, a double-sided adhesive layer having a first adhesive piece and a second adhesive piece on two major sides of the double-sided adhesive layer, respectively, where the first adhesive piece is for adhering to a major side of the release base member, the second adhesive piece is for adhering to an inner side of a sealing flap of the plastic courier bag, and, to seal the plastic courier bag, the base piece is removed from the release base member, and a reinforcing tape for adhering to an outer side of the sealing flap corresponding to the pull strip.

Preferably, the base piece has a series of protrusions disposed along a main edge of the base piece, protruding along a direction of the base piece's width. The protrusions jointly form various shapes so as to facilitate the removal of the base piece.

Preferably, the reinforcing tape has a greater width than that of the pull strip so as to reinforce the sealing flap of the plastic courier bag and facilitating the removal of the pull strip.

Preferably, the first adhesive piece of the double-sided adhesive layer covers a portion of the base piece and the entire pull strip so that the release base member may be reliably attached to the inner side of the sealing flap.

Preferably, the first adhesive piece of the double-sided adhesive layer does not cover the protrusions so as not to interfere the removal of the base piece.

To make the pull strip easier to tear, two perforated lines of appropriate lengths parallel to the pull strip are provided on the inner and outer sides of the sealing flap, respectively.

Compared to prior art, multiple sealing devices of the present invention may be applied to the inner side of a plastic courier bag and multiple reinforcing tapes may be applied to the outer side. The plastic courier bag may be quickly and conveniently opened by tearing down the pull strip. The plastic courier bag may be reused multiple times by applying new, unused sealing devices of the present invention.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective diagram showing a release base member of a sealing device according to an embodiment of the present invention.
FIG 2 is a perspective diagram showing a double-sided adhesive layer attached to the release base member of FIG 1.
FIG 3 is a perspective diagram showing the release base member of FIG 1 adhering to a major flap of a plastic courier bag.
FIG 4 is a perspective diagram showing a reinforcing tape adhering to an outer side of the plastic courier bag of FIG 3.
FIG 5 is another perspective diagram showing the reinforcing tape of FIG 4 after it is applied.
FIG 6 is a perspective diagram showing a base piece is pulled from a plastic courier bag so as to seal the plastic courier bag.
FIG 7 is a perspective diagram showing the base piece of FIG 6 is completely pulled off.
FIG 8 is a perspective diagram showing a sealed plastic courier bag.
FIG 9 is a perspective diagram a pull strip is lifted from the sealed plastic courier bag of FIG 8.
FIG 10 is a perspective diagram showing the pull strip is completely removed from the sealed plastic courier bag of FIG 9.
FIG 11 is a perspective diagram showing the plastic courier bag with the sealing flap flipped open.
FIG 12 is a perspective diagram showing the plastic courier bag is reused with a new sealing device applied.
FIG 13 is another perspective diagram showing the plastic courier bag of FIG 12.
FIG 14 is a perspective diagram showing the sealing device is applied to a different type of plastic courier bag.
FIG 15 is a perspective diagram showing a release paper is pulled from the plastic courier bag of FIG 14 so as to seal the plastic courier bag.
FIG 16 is a perspective diagram showing the plastic courier bag of FIG 15 after the pull strip is removed so as to open the plastic courier bag.

### DETAILED DESCRIPTION OF THE PREFERRED EMBODIMENTS

The following descriptions are exemplary embodiments only and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

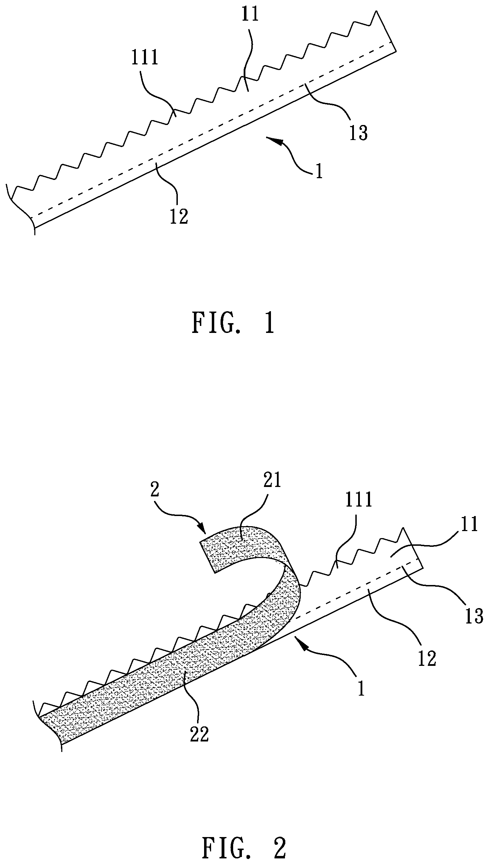

As illustrated in FIG 1, a sealing device according to an embodiment of the present invention includes a release base member 1 and a double-sided adhesive layer 2. The release base member 1 is made of a material capable of providing a release effect against adhesives and has an elongated strip shape. The release base member 1 may be rolled into a roll for convenient storage, transportation, and process. The release base member 1 has a separation line 13 along its length, separating the release base member 1 into a base piece 11 and a pull strip 12. The base piece 11 has a series of protrusions 111 disposed along a main edge of the base piece 11, protruding away from the separation line 13 and along a direction of the base piece 11's width. The protrusions 111 may jointly form various shapes such as a saw-tooth or wave shape and may be disposed apart at equal intervals. The base piece 11 has a width greater than that of the pull strip 12.

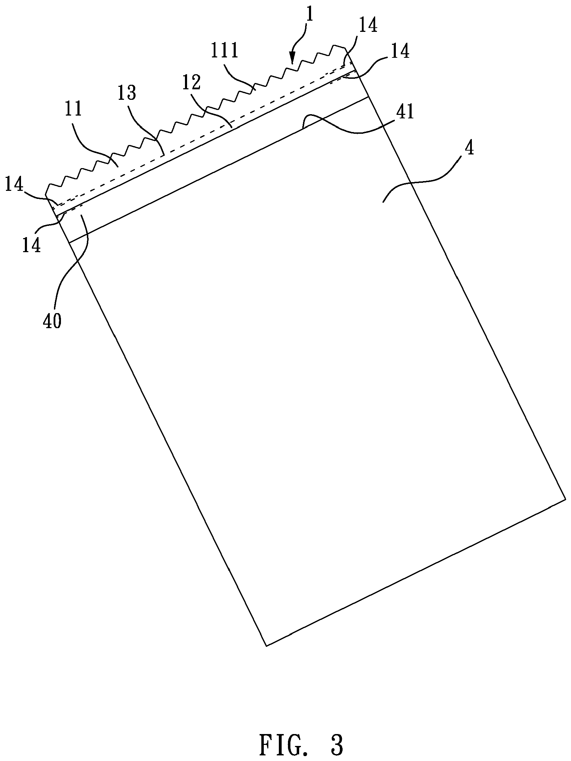

The double-sided adhesive layer 2, as shown in FIG 2, includes a first adhesive piece 21 and a second adhesive piece 22 on two opposing major sides of the double-sided adhesive layer 2, respectively. The first adhesive piece 21 is for adhering a major side of the release base member 1. The second adhesive piece 22 is for adhering to the inside of a plastic courier bag 4's sealing flap 40, as shown in FIG 3. In the present embodiment, the first adhesive piece 21 covers a majority portion of the base piece 11 and the entire pull strip 12. The protrusions 111 are not covered by the first adhesive piece 21.

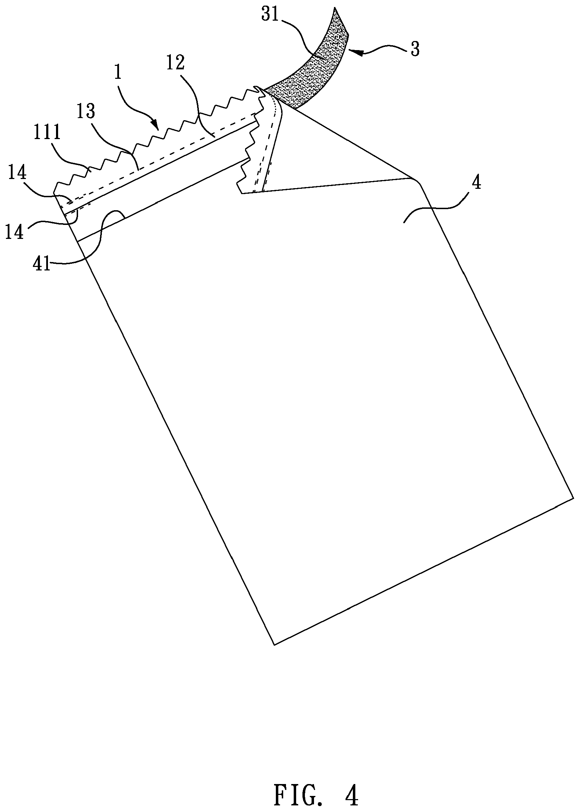

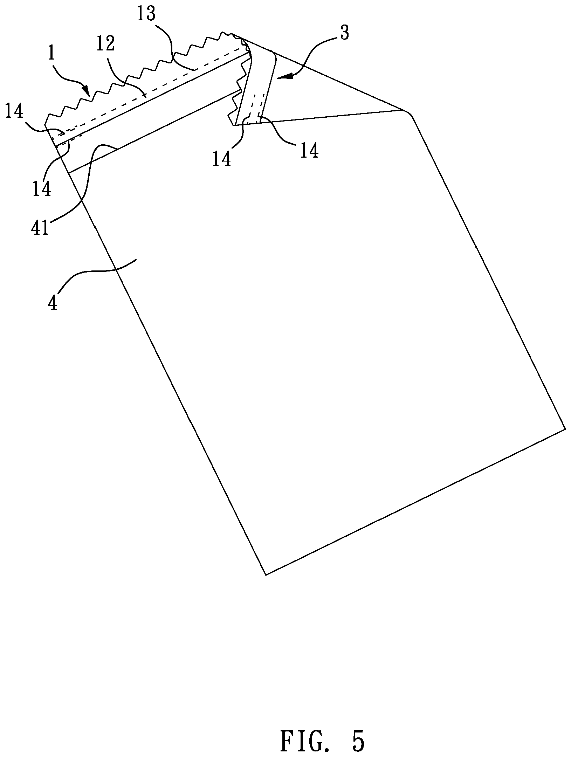

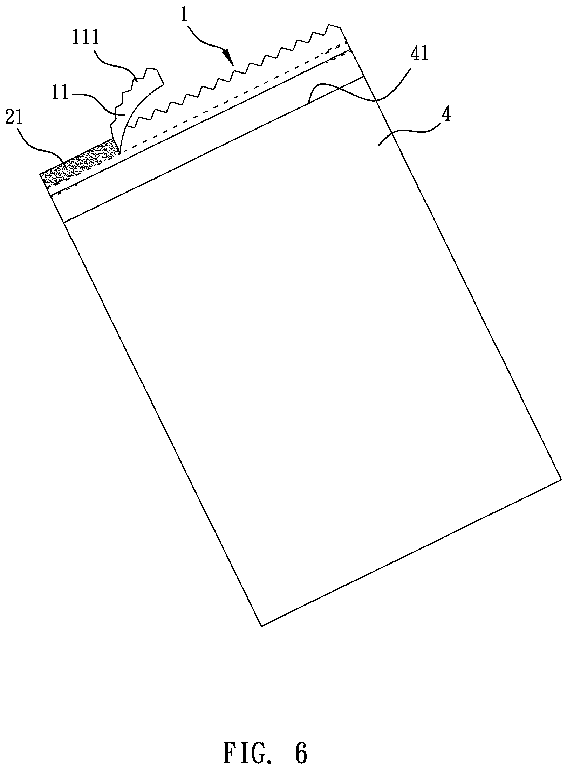

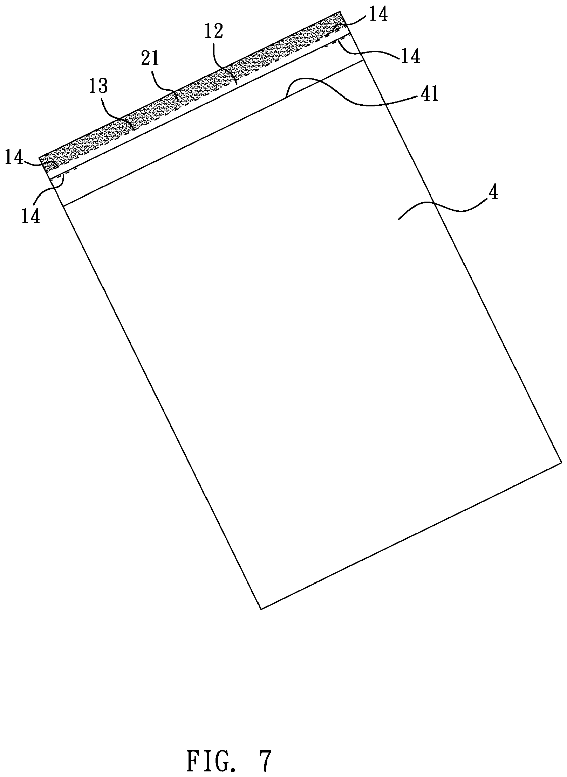

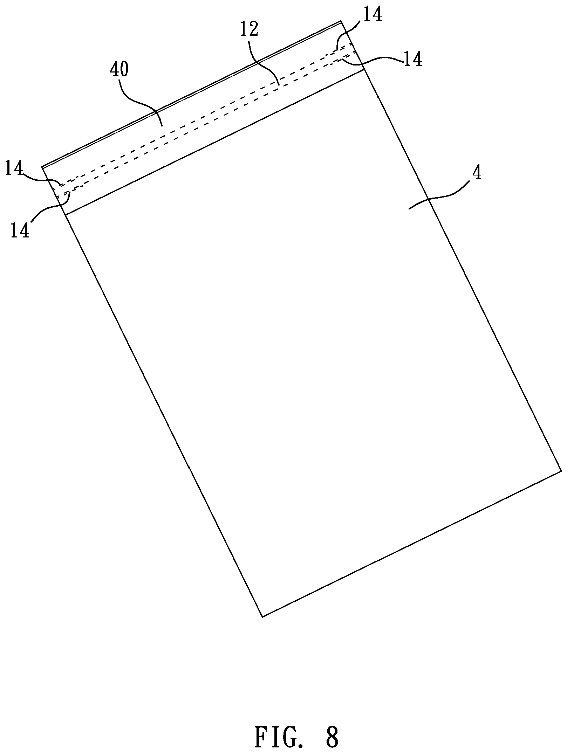

As also shown in FIG 3, an ordinary plastic courier bag 4 has a bag member with an opening 41 along a side and a sealing flap 40 extended from an edge of the opening 41. The release base member 1 adheres to an inner side of the flap 40 facing the opening 41. As the sealing flap 40 is not easy to open since the plastic courier bag 4 is rather thin and the sealing flap 40 may be deformed when tearing open the sealing flap 40, an additional reinforcing tape 3 is provided. The reinforcing tape 3 has an adhesive piece 31 on a major side and has a greater width than the width of the pull strip 12. The reinforcing tape 3 is attached to an outer side of the sealing flap 40 corresponding to the pull strip 12 using the adhesive piece 31, as shown in FIGS. 4 and 5. Perforated lines 14 of appropriate lengths parallel to the pull strip 12 are provided on the inner and outer sides of the sealing flap 40, respectively. To seal the plastic courier bag 4, the base piece 11 is torn to reveal the first adhesive piece 21, as shown in FIG 6, until the base piece 11 is completely removed, as shown in FIG 7. Then, the to-be-delivered product is placed in the plastic courier bag 4 through the opening 41. The sealing flap 40 is flipped 180 degrees so that the first adhesive piece 21 adheres to the plastic courier bag 4 and the sealing flap 40 seals the opening 41, as shown in FIG 8. The protrusions 111 facilitate the removal of the base piece 11 described above as they are not attached to the double-sided adhesive layer 2.

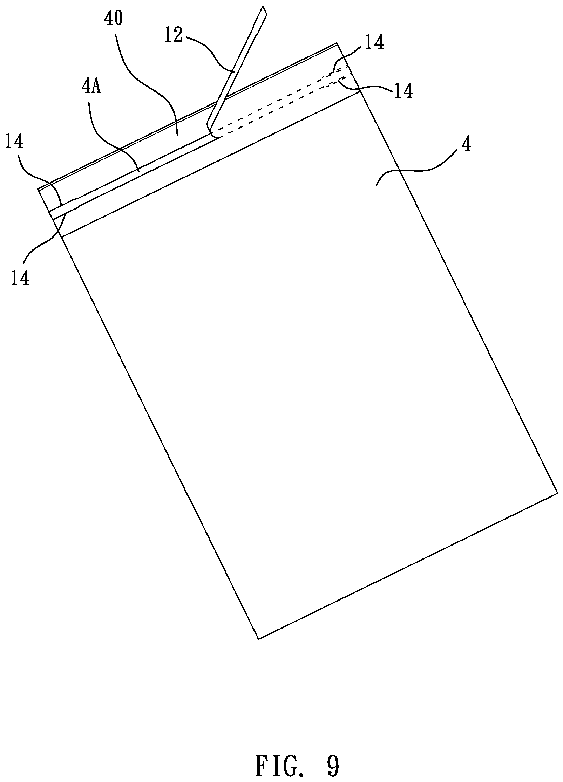

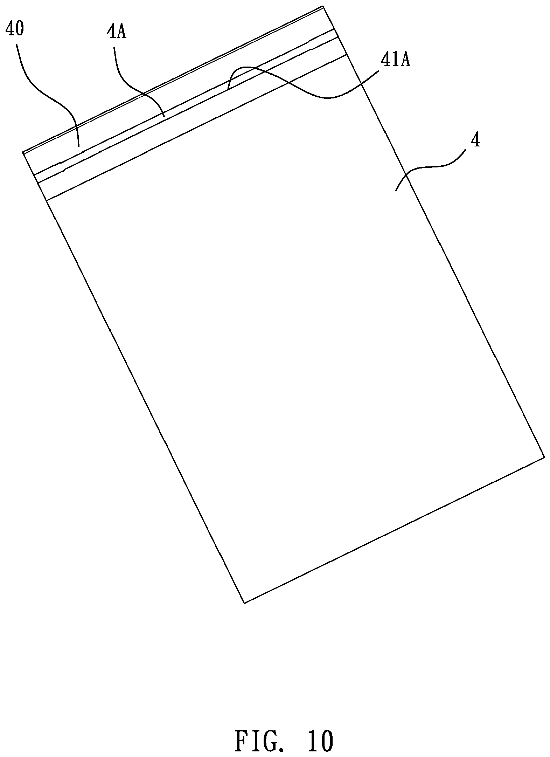

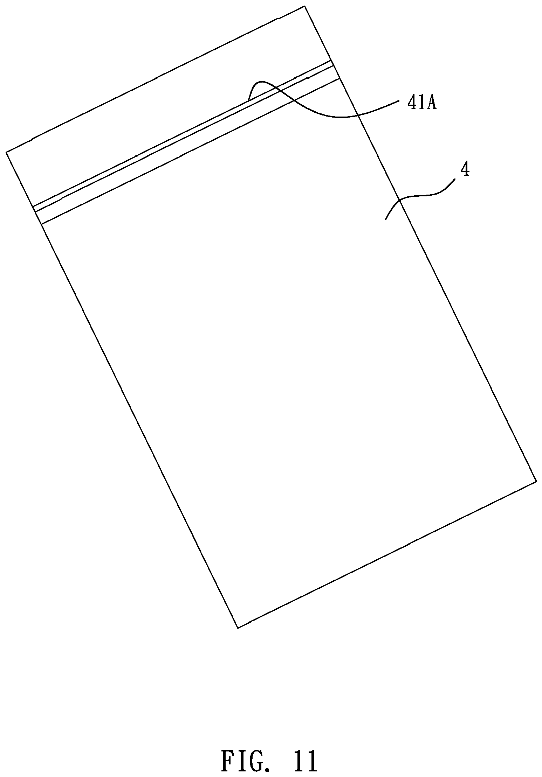

To open the plastic courier bag 4, any end of the pull strip 12 between the two perforated lines 14 is lifted, as shown in FIG 9, and the pull strip 12 is pulled along the length of the release base member 1 until the pull strip 12 is completely removed, thereby forming a ditch 4A that splits the sealing flap 40 and creates a new opening 41A, as shown in FIG 10. Then, the product inside the plastic courier bag 4 can be accessed through the opening 41A, as shown in FIG 11.

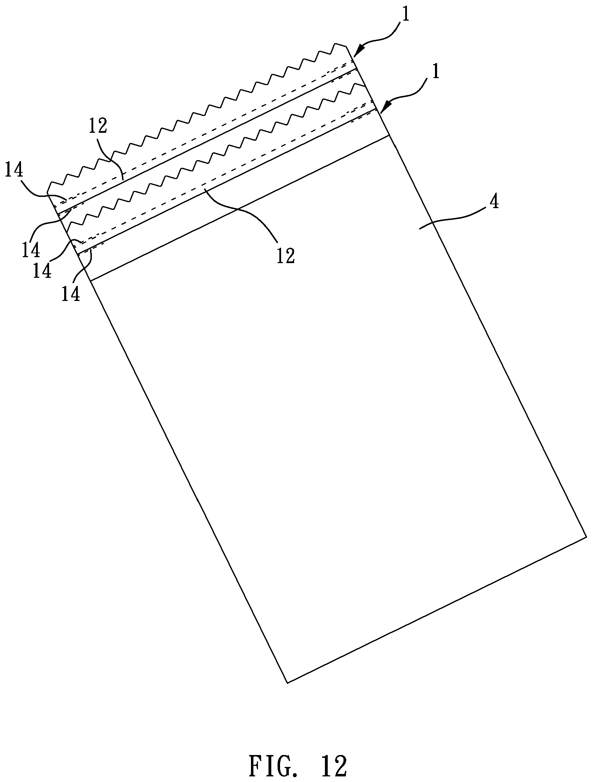

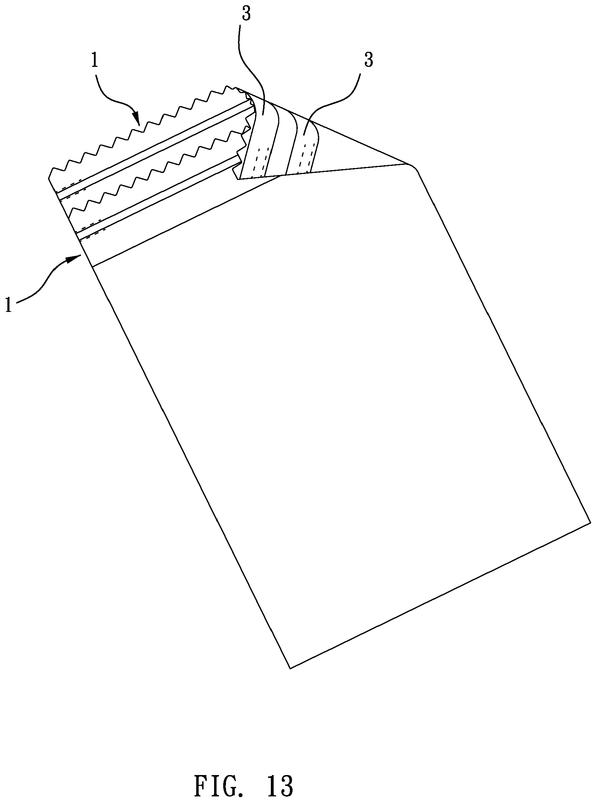

To reuse the plastic courier bag 4, an unused sealing device is employed and the plastic courier bag 4 is sealed and opened as described above, as shown in FIGS. 12 and 13.

As the plastic courier bag 4 is reused more times, more release base members 1 and reinforcing tapes 3 are accumulated, making the plastic courier bag 4 even more reusable.

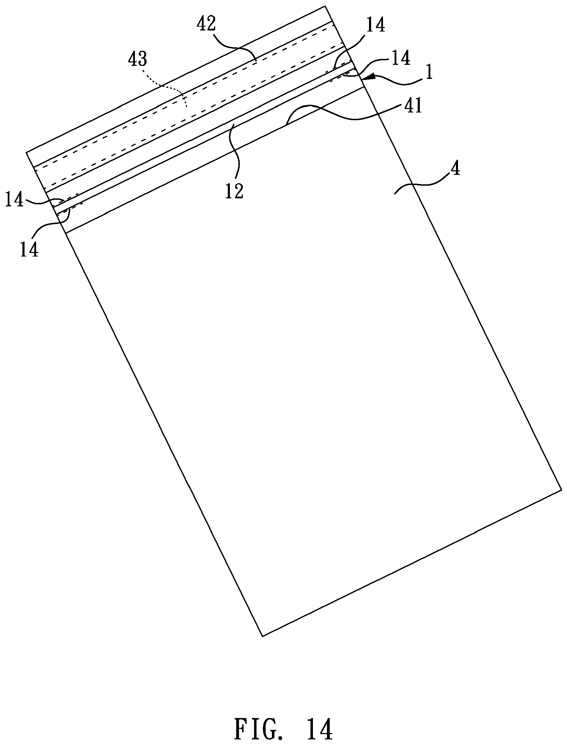

FIGS. 14 to 16 depict an application scenario where the sealing device is applied to another type of plastic courier bag 4 which also includes a bag member, an opening 41 to the inside of the bag member, and a wider sealing flap extended from the opening 41. An inner side of the sealing flap is coated with adhesive and thereby forms an adhesive piece 43. A release paper 42 covers the adhesive piece 43. The release base member 1 of the present embodiment adheres to the inner side of the sealing flap between the opening 41 and the adhesive piece 43. The reinforcing tape 3 adheres to the outer side the sealing flap corresponding to the release base member 1.

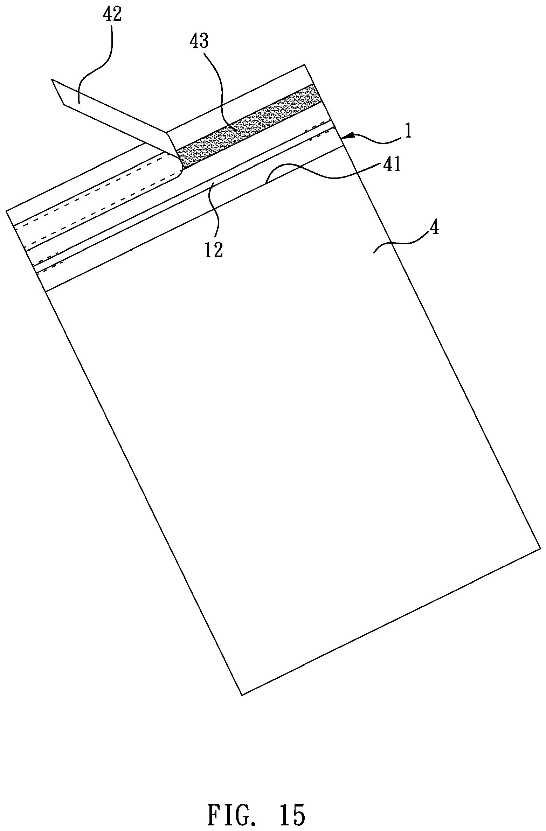

To seal the plastic courier bag 4, as shown in FIG 15, the release paper 42 is lifted to reveal the adhesive piece 43, and the sealing flap is flipped 180 degrees so that the adhesive piece 43 adheres the plastic courier bag 4 and the opening 41A is sealed.

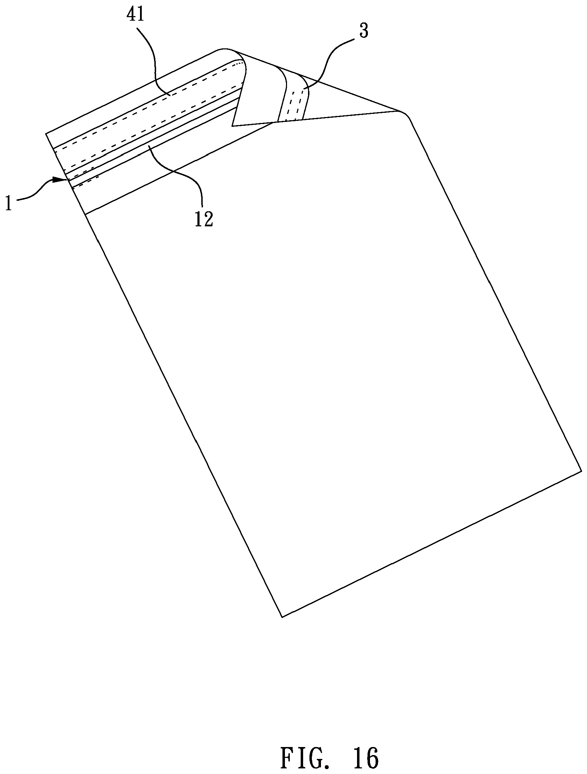

To open the plastic courier bag 4, an end of the pull strip 12 between the two perforated lines 14 is lifted and the pull strip 12 is pulled along the length of the release base member 1 until the pull strip 12 is completely removed, as shown in FIG 16. Then, the product inside the plastic courier bag 4 can be accessed through the opening, as shown in FIG 16.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the claims of the present invention.

## Claims

1. A plastic courier bag, comprising a sealing flap (40) and a sealing device attached to an inner side of the sealing flap (4), wherein the sealing device comprises:
a release base member (1) of an elongate shape having a separation line (13) along a length of the release base member (1) separating the release base member (1) into a base piece (11) and a pull strip (12);
a double-sided adhesive layer (2) having a first adhesive piece (21) and a second adhesive piece (22) on two major sides of the double-sided adhesive layer (2), respectively, where the first adhesive piece (21) is for adhering to a major side of the release base member (1), the second adhesive piece (22) is adhered to the inner side of the sealing flap (40) of the plastic courier bag (4), and, to seal the plastic courier bag (4), the base piece (11) is removed from the release base member (1); and **characterised by**
a reinforcing tape (3) adhered to an outer side of the sealing flap (40) of the plastic courier bag (4) and corresponding to the pull strip (12).

2. The plastic courier bag according to claim 1, wherein at least an additional reinforcing tape (3) is applied to the outer side of the sealing flap (40).

3. The plastic courier bag according to claim 1, wherein the reinforcing tape (3) has a greater width than that of the pull strip (12).

4. The plastic courier bag according to claim 1, wherein at least an additional release base member (1) adheres to the inner side of the sealing flap (40).

5. The plastic courier bag according to claim 1, wherein the first adhesive piece (21) covers a portion of the base piece (11) and the entire pull strip (12).

6. The plastic courier bag according to claim 4, wherein two perforated lines (14) of appropriate lengths parallel to the pull strip (12) are provided on the inner and outer sides of the sealing flap (40), respectively.

## Patentansprüche

1. Kunststoffkuriertasche, umfassend eine Versiegelungslasche (40) und eine Versiegelungsvorrichtung, die an einer Innenseite der Versiegelungslasche (4) angebracht ist, wobei die Versiegelungsvorrichtung folgendes umfasst:
ein Freigabebasiselement (1) von länglicher Form mit einer Trennlinie (13) entlang einer Länge des Freigabebasiselements (1), die das Freigabebasiselement (1) in ein Basisstück (11) und ein Zugband (12) unterteilt;
eine doppelseitige Klebschicht (2), umfassend ein erstes Haftteil (21) und ein zweites Haftteil (22) auf zwei Hauptseiten der doppelseitigen Klebschicht (2),
wobei das erste Haftteil (21) zum Haften an einer Hauptseite des Freigabebasiselements (1) dient, das zweite Haftteil (22) klebt an der Innenseite der Versiegelungslasche (40) der Kunststoffkuriertasche (4), und um die Kunststoffkuriertasche (4) zu versiegeln, wird das Basisstück (11) von dem Freigabebasiselement (1) entfernt; **gekennzeichnet durch**
ein Verstärkungsband (3), das an einer Außenseite der Versiegelungslasche (40) der Kunststoffkuriertasche (4) anliegt und dem Zugstreifen (12) entspricht.

2. Kunststoffkuriertasche nach Anspruch 1, wobei mindestens ein zusätzliches Verstärkungsband (3) an der Außenseite der Versiegelungslasche (40) angebracht ist.

3. Kunststoffkuriertasche nach Anspruch 1, wobei das Verstärkungsband (3) eine größere Breite hat, als der Zugstreifen (12).

4. Kunststoffkuriertasche nach Anspruch 1, wobei mindestens ein zusätzliches Freigabebasiselement (1) an der Innenseite der Versiegelungslasche (40) anliegt.

5. Kunststoffkuriertasche nach Anspruch 1, wobei das erste Haftteil (21) einen Teil des Basisstücks (11) und den gesamten Zugstreifen (12) abdeckt.

6. Kunststoffkuriertasche nach Anspruch 4, wobei zwei perforierte Linien (14) angemessener Länge parallel zu dem Zugstreifen (12) an der Innen- bzw. Außenseite der Versiegelungslasche (40) vorgesehen sind.

## Revendications

1. Sac messager en plastique, comprenant un rabat autoscellant (40) et un dispositif autoscellant attaché à un côté intérieur du rabat autoscellant (4), où le dispositif autoscellant comprend :
un élément de base de déblocage (1) de forme allongée ayant une ligne de séparation (13) le long de l'élément de base de déblocage (1) séparant l'élément de base de déblocage (1) en une pièce de base (11) et une bande de tirage (12);
une couche d'adhésive à double face (2) ayant une première pièce adhésive (21) et une deuxième pièce adhésive (22) sur deux côtés principaux de la couche d'adhésive à double face (2), respectivement, où la première pièce adhésive (21) sert à adhérer à un côté principal de l'élément de base de déblocage (1), la deuxième pièce adhésive (22) est adhérée au côté intérieur du rabat autoscellant (40) du sac messager en plastique (4), et, afin de sceller le sac messager en plastique (4), la pièce de base (11) est retirée de l'élément de base de déblocage (1); et **caractérisé par**
une bande de renforcement (3) adhérée à un côté extérieur du rabat autoscellant (40) du sac messager en plastique (4) et qui correspond à la bande de tirage (12).

2. Sac messager en plastique selon la revendication 1, dans lequel au moins une bande de renforcement additionnelle (3) est appliquée au côté extérieur du rabat autoscellant (40).

3. Sac messager en plastique selon la revendication 1, dans lequel la bande de renforcement (3) a une largeur supérieure à celle de la bande de tirage (12).

4. Sac messager en plastique selon la revendication 1, dans lequel au moins un élément de base de déblocage additionnel (1) adhère au côté intérieur du rabat autoscellant (40).

5. Sac messager en plastique selon la revendication 1, dans lequel la première pièce adhésive (21) couvre une partie de la pièce de base (11) et toute la bande de tirage (12).

6. Sac messager en plastique selon la revendication 4, dans lequel deux lignes perforées (14) de longueurs appropriées et parallèles à la bande de tirage (12) sont prévues sur les côtés extérieur et intérieur du rabat autoscellant (40), respectivement.
